# EUROPÄISCHE PATENTSCHRIFT

(11) **EP 1 277 257 B1**
(45) Veröffentlichungstag und Bekanntmachung des Hinweises auf die Patenterteilung: **01.02.2006**
(21) Anmeldenummer: 01919176.6
(22) Anmeldetag: 02.03.2001
(51) Int. Cl.: H02B 1/30, A47B 87/00

(54) **ANREIHBARES GERÜST EINES SCHALTFELDES FÜR MEHRFELDRIGE SCHALTANLAGEN**
ALIGNABLE HOUSING OF A SWITCHPANEL FOR MULTIPLE-PANEL SWITCHGEARS
BATIS ALIGNABLES DE TABLEAUX DE DISTRIBUTION POUR UNITES DE COMMUTATION A PLUSIEURS TABLEAUX DE DISTRIBUTION

(30) Priorität: 26.04.2000 DE 10021274
(43) Veröffentlichungstag der Anmeldung: 22.01.2003
(73) Patentinhaber: SIEMENS AKTIENGESELLSCHAFT, 80333 München (DE)
(72) Erfinder: SCHMIDT, Mario, 04430 Leipzig (DE); JOACHIM, Daniel, 04317 Leipzig (DE); CIHLAR, Michaela, 04207 Leipzig (DE)
(86) Internationale Anmeldenummer: PCT/DE2001/000886
(87) Internationale Veröffentlichungsnummer: WO 2001/082432

(56) Entgegenhaltungen:
- US-A- 5 747 734

## Beschreibung

Die Erfindung betrifft ein anreihbares Gerüst eines Schaltfeldes für eine mehrfeldrige Schaltanlage mit Seitenrahmen, die eine Systemlochung zur Aufnahme von Verbindungs- und/oder Befestigungselementen aufweisen.

Ein solches Gerüst zeigt z. B. die DE 44 12 465 A1. Es hat den Vorteil, dass daraus sowohl einzelne freistehende schrankartige Schaltfelder als auch mehrfeldrige Anlagen (WO 99/53582 A1) gefertigt werden können. Bei der Anreihung mehrerer gleicher Gerüste gelangen die Seitenrahmen zur gegenseitigen Anlage und können mittels der vorhandenen Systemlochung miteinander verbunden werden. Hierzu sind unterschiedliche Methoden bekannt. Den geringsten Aufwand stellen Durchgangsschrauben in Verbindung mit normalen Muttern dar. Allerdings muss der Monteur Schrauben und Muttern gleichzeitig auf beiden Seiten der anliegenden Seitenrahmen handhaben. Um dies zu vermeiden, ist es bekannt, spezielle Steck- oder Klemm-Muttern zu verwenden, die in einem ersten Arbeitsgang an dem einen der Rahmen angebracht werden. Die Schrauben werden dann in einem zweiten Arbeitsgang von der anderen Seite eingebracht.

Der Erfindung liegt die Aufgabe zugrunde, die Verbindung von Gerüsten zu mehrfeldrigen Schaltanlagen weiter zu vereinfachen.

Gemäß der Erfindung wird diese Aufgabe dadurch gelöst, dass die Systemlochung abwechselnd größere und kleinere Öffnungen aufweist und bezüglich einer Tiefenachse und einer Höhenachse der Seitenrahmen hinsichtlich der Größe der Öffnungen unsymmetrisch angeordnet ist. Hierdurch wird erreicht, dass bei der Anreihung von Gerüsten jeweils eine kleinere Öffnung mit einer größeren Öffnung korrespondiert, obwohl die linken und die rechten Seitenrahmen gleich sind. Dies schafft die Möglichkeit, die zur Verbindung der Gerüste erforderlichen Handhabungen nur von einer Seite vornehmen zu können. Hierzu ist es zweckmäßig, die kleineren Öffnungen entsprechend dem Kerndurchmesser gewindeformender Schrauben und die größeren Öffnungen als Durchgangslöcher der Schrauben zu bemessen. Muttern in irgendeiner Form werden somit nicht benötigt.

Während einzelne Schaltfelder oder Schaltschränke in sich funktionsfähige Einheiten darstellen, kann es in mehrfeldrigen Schaltanlagen erforderlich sein, gewünschte Funktionen durch eine zwei oder mehr Schaltfelder verbindende Steuerverdrahtung zu bewirken. Es ist dann die Aufgabe zu lösen, diese Steuerverdrahtung zwischen den Schaltfeldern so zu verlegen, dass sie einerseits ausreichend geschützt und funktionssicher ist, andererseits die Vornahme von Einbauten nicht behindert wird. Hierzu ist es bekannt, innerhalb des von den Seitenrahmen umgrenzten Raumes einen oder mehrere Kabelkanäle zu verlegen. Dabei ist zu beachten, dass dieser Raum teilweise von einem Sammelschienensystem beansprucht sein kann, das sich über mehrere Schaltfelder erstreckt.

Durch eine Weiterbildung der Erfindung kann die Verlegung einer feldübergreifenden Verdrahtung dadurch erleichtert werden, dass im Zuge der Systemlochung zur Aufnahme einer wenigstens zwei Schaltfelder verbindenden Verdrahtung geeignete zusätzliche Öffnungen angeordnet sind. Auf diese Weise wird der von den Rahmen umschlossene Raum nicht in Anspruch genommen. Zugleich liegt die Verdrahtung dort, wo zu ihrer Aufnahme benötigte Leitungskanäle am einfachsten befestigt werden können.

Die korrespondierenden Öffnungen für die Verdrahtung in den jeweils anliegenden Seitenrahmen sind dem Prinzip der Erfindung entsprechend gleichfalls unterschiedlich groß. Dies kann im Rahmen der Erfindung zum Schutz der Verdrahtung gegen Beschädigungen ausgenutzt werden, und zwar in der Weise, dass die kleineren der Öffnungen für die Verdrahtung mit einer als Kantenschutz dienenden Auskleidung versehen sind und dass die größeren Öffnungen für die Verdrahtung den größten Abmessungen der Auskleidung angepasst sind. Durch die Auskleidungen entsteht somit zwischen benachbarten Seitenrahmen der Gerüste kein störender Abstand.

Die Erfindung wird im Folgenden anhand eines in den Figuren dargestellten Ausführungsbeispieles näher erläutert.

Die Figur 1 zeigt eine aus drei Schaltfeldern bestehende Niederspannungs-Schaltanlage.

Die Figur 2 zeigt einen Seitenrahmen eines Gerüstes eines Schaltfeldes der Schaltanlage gemäß der Figur 1.

In der Figur 3 ist die Verbindung von zwei benachbarten Gerüsten an Hand eines vergrößerten Schnittes von zwei aneinander anliegenden Seitenrahmen gemäß der Figur 2 veranschaulicht.

Die Figur 4 zeigt eine Einzelheit der Seitenrahmen gemäß der Figur 2 im Bereich von zusätzlichen Öffnungen, die zur Aufnahme einer Verdrahtung dienen.

In der Figur 5 sind die in der Figur 4 gezeigten Teile ohne Abstand, d. h. in der Position dargestellt, wie sie bei miteinander verbundenen Seitenrahmen von Gerüsten gegeben ist (Schnitt V-V in Figur 2).

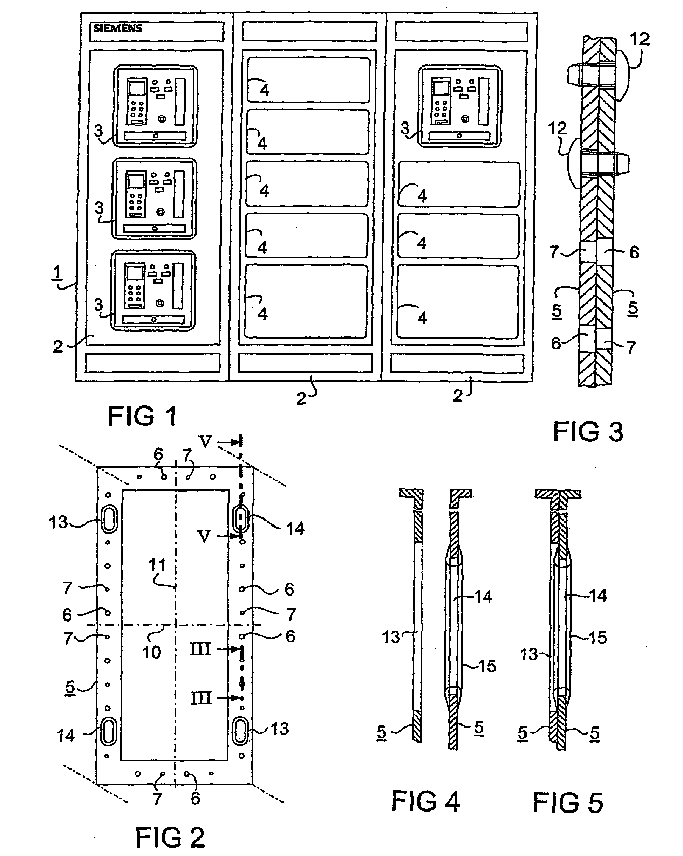

Die in der Figur 1 gezeigte Niederspannungs-Schaltanlage 1 weist drei Schaltfelder 2 auf, die nach Bedarf mit Schaltgeräten und Ausrüstungen bestückt sind. Als Beispiel weist das linke Schaltfeld 2 drei übereinander angeordnete Leistungsschalter 3, das mittlere Schaltfeld 2 mehrere Geräteeinsätze oder Geräteeinschübe 4 und das rechte Schaltfeld 2 eine Kombination eines Leistungsschalters 3 mit Geräteeinsätzen oder Geräteeinschüben 4 auf. In bekannter Weise kann die Anzahl der Schaltfelder, ihre Ausrüstung mit Schaltgeräten und Schaltgerätekombinationen sowie die Breite der Schaltfelder dem jeweiligen Bedarf angepasst sein. Die Höhe und die Tiefe der Schaltfelder ist dagegen in der Regel gleich. Jedes der Schaltfelder weist zur Aufnahme der genannten Geräteausrüstungen ein Gerüst auf, das aus Seitenrahmen gemäß der Figur 2 und diese Seitenrahmen verbindenden Querstreben zusammengesetzt ist.

Die für die Erfindung wesentliche Ausgestaltung der Systemlochung der Seitenrahmen 5 gemäß der Figur 2 wird im Folgendem näher erläutert. Wie man erkennt, wechseln größere und kleinere Öffnungen 6 und 7 bzw. 13 und 14 einander ab. Wesentlich ist hierbei, dass die größeren Öffnungen 6 und die kleineren Öffnungen 7 bezüglich einer Tiefenachse 10 und einer Höhenachse 11 unsymmetrisch angeordnet sind. Als Beispiel seien die oberhalb der Tiefenachse 10 gelegenen Öffnungen betrachtet. Dabei ist zu erkennen, dass einer größeren Öffnung 6 im linken Holm des Seitenrahmens 5 eine kleinere Öffnung 7 im rechten Holm des Seitenrahmens 5 gegenübersteht. Dementsprechend folgt anschließend an die größere Öffnung 6 im linken. Holm des Seitenrahmens 5 eine kleinere Öffnung 7, der im rechten Holm eine größere Öffnung 6 gegenübersteht.

Eine entsprechende Verteilung der größeren und der kleineren Öffnung ist bezüglich der Höhenachse 11 zu beobachten. Diese Anordnung der Öffnungen hat zur Folge, dass jeweils eine größere Öffnung 6 mit einer kleineren Öffnung 7 korrespondiert, wenn zwei gleiche Seitenrahmen 5 einander zugekehrt miteinander verbunden werden, wie dies bei der Anreihung der Gerüste zur Bildung einer mehrfeldrigen Schaltanlage der Fall ist. Als Einzelheit zeigt die Figur 3 den Schnitt III-III in der Figur 2. Zur Verwendung gewindeformender Schrauben 12, beispielsweise Furchschrauben, sind dabei die größeren Öffnungen 6 als Durchgangsöffnungen für die Schrauben 12 bemessen, während die kleineren Öffnungen 7 dem Kerndurchmesser des Gewindes der Schrauben 12 entsprechen. Da keine Muttern benötigt werden, können die benachbarten Gerüste durch jeweils nur auf der Seite des einen der Gerüste vorzunehmende Handhabungen verbunden werden.

In die Systemlochung der Seitenrahmen 5 sind zusätzliche Öffnungen 13 und 14 einbezogen, die zur Aufnahme einer wenigstens zwei benachbarte Schaltfelder verbindenden Verdrahtung vorgesehen sind. Diese vorzugsweise etwa langlochartigen Öffnungen befinden sich nahe den oberen und unteren Holmen der Seitenrahmen 5. Die kleineren Öffnungen 14 sind mit einer Auskleidung versehen, die einen Schutz der durchzuführenden Leitungen gegen eine Beschädigung ihrer Isolierung gewährleisten. Im verbundenen Zustand benachbarter Gerüste gemäß der Figur 5 (Schnitt V-V in Figur 2) taucht die Auskleidung 15 der kleineren Öffnung 14 in die größere Ausnehmung 13 ein und schirmt hierdurch auch die größere Öffnung 13 ab. Durch die gegenseitige Abstimmung der Öffnungen 13 und 14 sowie der Auskleidung 15 wird erreicht, dass die aneinander angrenzenden Seitenrahmen 5 ohne Zwischenraum verbunden werden können, wie dies die Figur 5 veranschaulicht.

## Patentansprüche

1. Anreihbares Gerüst eines Schaltfeldes für eine mehrfeldrige Schaltanlage (1) mit Seitenrahmen (5), die eine Systemlochung zur Aufnahme von Verbindungs- und/oder Befestigungselementen aufweisen,
**dadurch gekennzeichnet , daß**
die Systemlochung abwechselnd größere und kleinere Öffnungen (6, 7; 13, 14) aufweist und bezüglich einer Tiefenachse (10) und einer Höhenachse (11) der Seitenrahmen (5) hinsichtlich der Größe der Öffnungen (6, 7; 13, 14) unsymmetrisch angeordnet ist.

2. Anreihbares Gerüst nach Anspruch 1,
**dadurch gekennzeichnet , daß**
die kleineren Öffnungen (7) entsprechend dem Kerndurchmesser gewindeformender Schrauben (12) und die größeren (6) Öffnungen als Durchgangslöcher der Schrauben (12) bemessen sind.

3. Anreihbares Gerüst nach Anspruch 1 oder 2,
**dadurch gekennzeichnet , daß**
im Zuge der Systemlochung zur Aufnahme einer wenigstens zwei Schaltfelder verbindenden Verdrahtung in den Seitenrahmen (5) geeignete zusätzliche
Öffnungen (13, 14) angeordnet sind.

4. Anreihbares Gerüst nach Anspruch 3,
**dadurch gekennzeichnet, daß**
die kleineren (14) der Öffnungen (13, 14) für die Verdrahtung mit einer als Kantenschutz dienenden Auskleidung (15) versehen sind und dass die größeren Öffnungen (13) für die Verdrahtung den größten Abmessungen der Auskleidung (15) angepasst sind.

## Claims

1. Modular rack for a switchgear panel for a multiple section switchgear assembly (1) having side frames (5), which have system perforation for holding connection and/or attachment elements,
**characterized in that**
the system perforation has alternately larger and smaller openings (6, 7; 13, 14) and is arranged asymmetrically with regard to the size of the openings (6, 7; 13, 14) with respect to a depth axis (10) and a height axis (11) of the side frames (5).

2. Modular rack according to Claim 1,
**characterized in that**
the sizes of the smaller openings (7) correspond to the core diameter of threaded screws (12), and the larger openings (6) are designed as holes through which the screws (12) pass straight through.

3. Modular rack according to Claim 1 or 2,
**characterized in that**
in the course of the system perforation for holding wiring which connects at least two switchgear panels, suitable additional openings (13, 14) are arranged in the side frames (5).

4. Modular rack according to Claim 3,
**characterized in that**
the smaller (14) of the openings (13, 14) are provided with cladding (15), which is used as edge protection, for the wiring, and **in that** the larger openings (13) are matched to the largest dimensions of the cladding (15) for the wiring.

## Revendications

1. Bâti alignable de tableau de distribution pour une installation (1) de distribution à plusieurs tableaux de distribution, ayant des cadres (5) latéraux, qui présentent un perçage du système pour la réception d'éléments de liaison et/ou de fixation,
**caractérisé en ce que**
le perçage du système présente alternativement des ouvertures (6, 7 ; 13, 14) plus grandes et plus petites et le perçage est disposé de façon dissymétrique en ce qui concerne la taille des ouvertures (6, 7 ; 13, 14) relativement à un axe (10) de profondeur et à un axe (11) de hauteur des cadres (5) latéraux.

2. Bâti alignable selon la revendication 1,
**caractérisé en ce que**
les ouvertures (7) plus petites sont dimensionnées conformément au diamètre d'âme de vis (12) qui forment des filets et les ouvertures (6) plus grandes sont dimensionnées en tant que trous de passage des vis (12).

3. Bâti alignable selon la revendication 1 ou 2,
**caractérisé en ce que**
des ouvertures (13, 14) supplémentaires appropriées sont disposées dans les cadres (5) latéraux au cours du perçage du système pour la réception d'un câblage reliant au moins deux tableaux de distribution.

4. Bâti alignable selon la revendication 3,
**caractérisé en ce que**
les ouvertures (13, 14) les plus petites (14) sont pourvues pour le câblage d'un revêtement (15) servant de bordure de protection et **en ce que** les ouvertures (13) les plus grandes sont adaptées pour le câblage aux dimensions les plus grandes du revêtement (15).
